# EUROPÄISCHE PATENTSCHRIFT

(11) **EP 3 549 233 B1**
(45) Veröffentlichungstag und Bekanntmachung des Hinweises auf die Patenterteilung: **31.03.2021**
(21) Anmeldenummer: 17780377.2
(22) Anmeldetag: 03.10.2017
(51) Int. Cl.: H05B 45/37, H05B 45/382

(54) **BETRIEBSGERÄT MIT TESTSCHALTER UND STATUSANZEIGE**
OPERATING DEVICE HAVING A TEST SWITCH AND STATUS INDICATOR
ÉQUIPEMENT DE COMMANDE COMPRENANT UN COMMUTATEUR DE TEST ET UN AFFICHAGE D'ÉTAT

(30) Priorität: 30.11.2016 DE 202016007323 U
(43) Veröffentlichungstag der Anmeldung: 09.10.2019
(73) Patentinhaber: Tridonic GmbH & Co KG, 6851 Dornbirn (AT)
(72) Erfinder: DIXON, David, Hadrian Park Wallsend NE28 9QZ (GB)
(74) Vertreter: Beder, Jens
(86) Internationale Anmeldenummer: PCT/EP2017/075031
(87) Internationale Veröffentlichungsnummer: WO 2018/099630

(56) Entgegenhaltungen:
- EP-A1- 2 287 996
- AT-U1- 14 625
- DE-A1- 10 038 969
- DE-A1-102012 214 832

## Beschreibung

Die Erfindung liegt im Feld der Notbeleuchtung und betrifft insbesondere eine Anordnung umfassend ein Betriebsgerät für Notleuchten mit einem Testschalter und einer Statusanzeige und eine entsprechende Notbeleuchtung.

Für Notlichtsysteme werden Betriebsgeräte (Vorschaltgeräte) für den Betrieb angeschlossener Leuchten mit einer zusätzlichen Spannungsversorgung genutzt, die den Betrieb der angeschlossenen Leuchten über einen vorbestimmten Zeitraum auch bei Ausfall der Netzstromversorgung sicherstellt. Die Stromversorgung wird für den Ausfall der primären Netzstromversorgung mittels in Akkumulatoren gespeicherter Energie für eine Bemessungsbetriebsdauer aufrechterhalten, um Personen, mit einer bestimmten Beleuchtungsstärke über die Bemessungsbetriebsdauer beispielsweise das Verlassen eines Gebäudes zu ermöglichen.

Die Funktionsfähigkeit der Notbeleuchtung ist in regelmäßigen Abständen im Rahmen von Funktionstests ebenso wie laufend im Betrieb im Rahmen von Selbsttests zu prüfen. Ein solcher Funktionstest wird beispielsweise durch Betätigen eines extern an ein Notlichtbetriebsgerät angeschlossenen Testschalters (Prüftaster) ausgelöst. Der Anschluss des Testschalters an das Notlichtbetriebsgerät erfolgt zweidrahtig, häufig mittels Steckverbinder, und erfordert daher zwei extern zugängliche Anschlussmöglichkeiten an dem Notlichtbetriebsgerät.

Die Betriebszustand (Status) eines Notbeleuchtungssystems wird üblicherweise extern signalisiert. Hierzu kann eine grüne Leuchtdiode (LED) ein betriebsbereites Notbeleuchtungssystem signalisieren, während ein erkannter Fehler des Notbeleuchtungssystems mittels einer roten LED signalisiert wird. Übliche Betriebsgeräte weisen daher mindestens jeweils zwei weitere externe Anschlüsse für die LEDs zur Statusanzeige auf.

Damit weisen Betriebsgeräte für Notbeleuchtungssysteme wenigstens sechs externe Anschlüsse auf, die entsprechenden Raum in einem Gehäuse und entsprechenden Aufwand bei der Verkabelung im Rahmen der Installation eines Notlichtsystems erfordern.

Die Druckschrift DE102012214832A1 offenbart ein Betriebsgerät der Stand der Technik. Der Erfindung liegt daher die Aufgabe zugrunde, die Komplexität eines Betriebsgeräts tur Notbeleuchtungssysteme zu verringern.

Die Aufgabe wird von einer Anordnung aus einem Betriebsgerät und einer ersten Leuchtdiode, einer zweiten Leuchtdiode und einem Testschalter, die die Merkmale des unabhängigen Anspruchs 1 aufweist, sowie eine Notbeleuchtung gemäß der Erfindung gelöst.

Die Anordnung umfasst ein Betriebsgerät für Notbeleuchtung, eine erste Leuchtdiode, eine zweite Leuchtdiode und einen Testschalter. Die Anordnung ist dadurch gekennzeichnet, dass das Betriebsgerät einen ersten Anschluss und einen zweiten Anschluss umfasst, wobei die erste Leuchtdiode und die zweite Leuchtdiode gegenläufig parallel zwischen den ersten Anschluss und den zweiten Anschluss geschaltet sind. Der Testschalter ist vorzugsweise parallel zu erster Leuchtdiode und zweiter Leuchtdiode geschaltet und eingerichtet, bei Betätigung den ersten Anschluss mit dem zweiten Anschluss kurzzuschließen.

Die erfindungsgemäße Anordnung verringert die Anzahl der notwendigen externen Anschlüsse des Betriebsgeräts auf lediglich zwei insgesamt gegenüber den ursprünglich sechs Anschlüssen. Damit werden entsprechend die Bauraumanforderungen an das Gehäuse des Betriebsgeräts reduziert. Aufgrund der entfallenden Anschlüsse, beispielsweise Buchsen oder Klemmen, sind die Stückkosten des einzelnen Betriebsgeräts ebenfalls reduziert. Der Verkabelungsaufwand für das Betriebsgerät ist aufgrund der verringerten Anzahl anzuschließender Leitungen ebenfalls verringert, was sich in reduzierten Installationskosten niederschlägt. Die verringerte Anzahl externer Anschlüsse ermöglicht für das Design des Gehäuses des Betriebsgeräts mehr Freiheitsgrade.

Weitere vorteilhafte Weiterbildungen der Erfindung sind Gegenstand der abhängigen Ansprüche.

Eine bevorzugte Anordnung weist das Betriebsgerät mit einer Konstantstromquelle auf, wobei die Konstantstromquelle ausgelegt ist, einen Konstantstrom mit einer ersten oder mit einer der ersten Polarität entgegengesetzten zweiten Polarität zwischen dem ersten Anschluss und dem zweiten Anschluss einzuprägen.

Eine vorteilhafte erfindungsgemäße Anordnung umfasst das Betriebsgerät mit einer Steuerschaltung, wobei die Steuerschaltung ausgelegt ist, einen Kurzschluss zwischen dem ersten Anschluss und dem zweiten Anschluss zu erfassen.

Die Anordnung nach einem vorteilhaften Ausführungsbeispiel umfasst eine Steuerschaltung des Betriebsgeräts, wobei die Steuerschaltung ausgelegt ist, einen Kurzschluss zwischen dem ersten Anschluss und den zweitem Anschluss zu erfassen, indem bestimmt wird, dass für einen begrenzten Konstantstrom zwischen dem ersten Anschluss und dem zweiten Anschluss eine Spannung zwischen dem ersten Anschluss und dem zweiten Anschluss einen Grenzwert unterschreitet.

Eine Ausführung der erfindungsgemäßen Anordnung weist die Steuerschaltung dafür ausgelegt auf, einen Kurzschluss zwischen dem ersten Anschluss und dem zweiten Anschluss auf Grundlage eines Regelparameters der Konstantstromquelle, insbesondere auf Grundlage einer Taktung eines Schalters der Konstant- stromquelle, zu bestimmen.

Eine weitere Anordnung nach einem Ausführungsbeispiel zeigt die Steuerschaltung dafür ausgelegt, die Konstantstromquelle so zu steuern, dass entweder der erste Konstantstrom mit der ersten Polarität oder der zweite Konstantstrom mit der zweiten Polarität zwischen dem ersten Anschluss und dem zweiten Anschluss eingeprägt wird.

Eine weitere Ausführung der erfindungsgemäßen Anordnung ist dadurch ausgezeichnet, dass die Konstantstromquelle ausgelegt ist, zwischen dem ersten Strom erster Polarität oder dem zweiten Strom zweiter Polarität umzuschalten. Die Konstantstromquelle kann eine erste Konstantstromquelle und eine zweite Konstantstromquelle umfassen, wobei alternativ die erste oder die zweite Konstantstromquelle an den ersten Anschluss und an den zweiten Anschluss geschaltet werden können.

Der erste Anschluss und der zweite Anschluss können über eine ODER-Verknüpfung einer Auswerteschaltung verbunden sein, und die Auswertschaltung kann eine Betätigung des Testschalters signalisieren, wenn der erste Anschluss und der zweite Anschluss kurzgeschlossen sind und somit auf gleichem Potential liegen.

In einer besonders bevorzugten Ausführung der erfindungsgemäßen Anordnung sind erste Leuchtdiode, zweite Leuchtdiode und der Testschalter in einer gemeinsamen Baugruppe, insbesondere in einem gemeinsamen Baugruppengehäuse, integriert ausgeführt.

Damit wird gegenüber den üblichen, voneinander getrennt ausgeführtem Prüftaster einerseits und Statusanzeigen andererseits eine reduzierte Anzahl von Einheiten für die erfindungsgemäße Anordnung erreicht, die insbesondere aufgrund der erfindungsgemäßen Reduktion auf zwei gegenüber den ursprünglich sechs Anschlüssen möglich und besonders vorteilhaft ist. Die zwei Verbindungen über den ersten Anschluss und den zweiten Anschluss von dem Betriebsgerät zu der Baugruppe können beispielsweise mittels Steckverbinder oder als Crimpverbindungen ausgebildet sein. Somit sind die Logistik durch die entsprechend geringere Anzahl getrennt zu verwaltender Bauteile, die Kosten für die Komponentenfertigung des Notlichtsystems, sowie die mit der Installation verbundenen Kosten entsprechend reduziert.

Die Aufgabenstellung wird auch durch eine Notbeleuchtung aufweisend zumindest ein Notleuchtmittel und eine erfindungsgemäße Anordnung gelöst.

Weitere Ziele, Vorteile, Merkmale und Anwendungsmöglichkeiten der Erfindung ergeben sich aus der nachfolgenden Beschreibung eines Ausführungsbeispiels anhand der beiliegenden Figur. Dabei können alle beschriebenen Merkmale für sich oder in vorteilhafter Kombination den Gegenstand der in den anhängenden Ansprüchen definierten Erfindung bilden. Es zeigen:
- Fig. 1: eine Anordnung aus einem Betriebsgerät und einer ersten Leuchtdiode, einer zweiten Leuchtdiode und einem Testschalter gemäß einer bevorzugten Ausführung der Erfindung,
- Fig. 2: eine detailliertere schematische Darstellung eines Betriebsgerätes gemäß einer bevorzugten Ausführung der Erfindung,
- Fig. 3: eine detailliertere Darstellung einer Konstantstromquelle gemäß einer bevorzugten Ausführung der Erfindung.

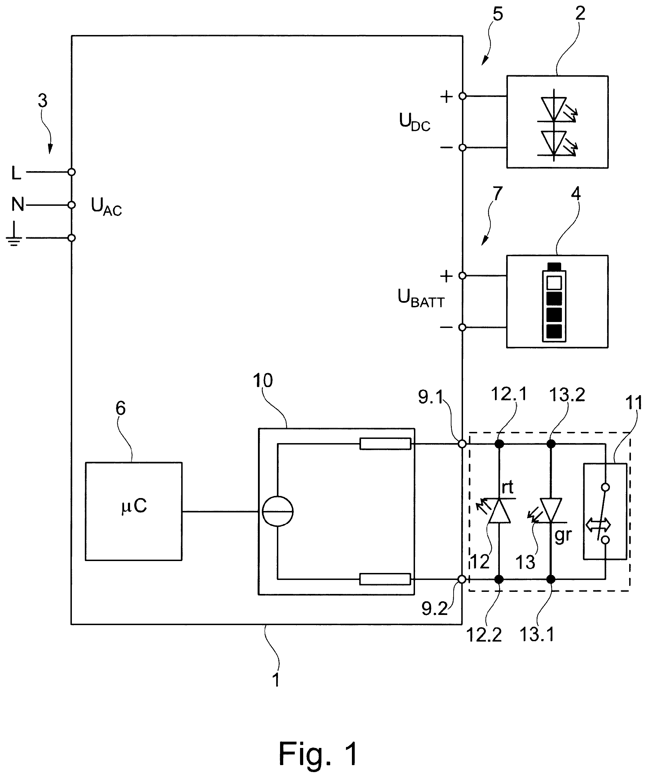

Eine erfindungsgemäße Anordnung aus einem Betriebsgerät 1, einer ersten Leuchtdiode 12, einer zweiten Leuchtdiode 13 und einem Testschalter 11 gemäß einer bevorzugten Ausführung der Erfindung ist in Figur 1 gezeigt.

Das Betriebsgerät 1 ist lediglich mit für die Darstellung der Erfindung hilfreichen Elementen dargestellt. Ein Netzanschluss 3 des Betriebsgeräts dient dem Anschluss des Betriebsgeräts 1 an eine Netzspannungsversorgung eines Gebäudes, beispielsweise mit Wechselspannung U_{AC}=230 V bei 50 Hz. Das Betriebsgerät 1 ist dafür ausgelegt, ein oder mehrere Leuchtenmodule 2 als Last an einem Leuchtenausgang 5 mit einer Gleichspannung U_{DC} zu betreiben. Beispielsweise kann das Betriebsgerät 1 an einem oder mehreren Leuchtenausgängen 5 eine Gleichspannung in einem Spannungsbereich von 10 bis 52 V bei einem entsprechend einer Spannungs-Strom-Kennlinie zu entnehmenden LED-Strom bereitstellen.

Das Leuchtenmodul 2 umfasst Leuchtmittel, im dargestellten Beispiel Leuchtdioden (LEDs), die mit dem LED-Strom über den Leuchtenausgang 5 betrieben werden. Dabei kann das Leuchtenmodul 2 ein oder mehrere Leuchtmittel für den Notlichtbetrieb umfassen. Im Notlichtbetrieb können eines, mehrere oder alle Leuchtmittel des Leuchtenmoduls 2 betrieben werden.

Sind die vorstehend dargestellten Elemente typisch für allgemeine Bauformen von Betriebsgeräten (Vorschaltgeräte, Ballast), so weist das gezeigte Betriebsgerät 1 für den Einsatz als Betriebsgerät im Rahmen von Notbeleuchtungssystemen einen zusätzlichen Batterieanschluss 7 auf. Am Batterieanschluss 7 ist ein Akkumulator 4 angeschlossen. Der Akkumulator 4 wird von dem Betriebsgerät 1 über den Batterieanschluss 7 mit einem Ladestrom elektrisch aufgeladen. Im Betriebsfall der Notbeleuchtung, also beispielsweise einem Ausfall der gebäudeseitigen Netzspannungsversorgung mit der Netzspannung U_{AC}, versorgt das Betriebsgerät 1 den Leuchtenanschluss 5 und damit das Leuchtenmodul 2 mit elektrischer Energie aus dem Akkumulator 4 mit einem entsprechenden Leuchtenstrom I_{LED} während einer Bemessungsbetriebsdauer, die beispielsweise auf 1 h. 2h oder 3h voreinstellbar ist.

Leuchtenanschluss 5, Batterieanschluss 7 und ein unten erläuterter erster Anschluss 9.1 und zweiter Anschluss 9.2 des Betriebsgeräts 1 sind im Gegensatz zum Netzanschluss 3 als SELV klassifiziert und von dem Netzanschluss 3 getrennt, betriebsgerätintern mittels einer Potentialbarriere von dem Netzanschluss 3 ausgeführt.

Die Steuerung des Betriebsgeräts 1 erfolgt mittels einer Steuerschaltung, insbesondere einem Mikroprozessor 6. Der Mikroprozessor 6 kann nicht nur Funktionen für den Wechsel von Betriebszuständen wie Bereitschaftsbetrieb (Ruhebetrieb), Notlichtbetrieb, Ladebetrieb des Akkumulators 4, Überwachung einer LED-Last am Ausgang, steuern, sondern auch Funktionen für die unterschiedlichen Tests des Betriebsgeräts und seiner Anschlüssen ausführen.

Einer oder mehrere verschiedene Funktionstests können über einen externen Testschalter 11 ausgelöst werden oder bestimmte Intervalle, beispielsweise täglich, wöchentlich, jährlich für Funktionstests können über den Testschalter 4 bestimmt werden. Der Testschalter 4 kann beispielsweise als Schaltwippe, als Wechselschalter oder auch bevorzugt als Taster ausgebildet sein.

Der Testschalter 11 ist erfindungsgemäß zusammen mit einer ersten Leuchtdiode 12, dargestellt als rote Leuchtdiode 12, und einer zweiten Leuchtdiode 13, gezeigt als grüne Leuchtdiode 13, an einen ersten Anschluss 9.1 und einen zweiten Anschluss 9.2 des Betriebsgeräts 1 geschaltet. Insbesondere ist der erste Anschluss 9.1 mit einem ersten Kontakt 12.1 (Kathode) der ersten Leuchtdiode 12 und einem zweiten Kontakt 13.2 (Anode) der zweiten Leuchtdiode 13 leitend verbunden. Der zweite Anschluss 9.2 ist dann mit einem zweiten Kontakt 12.2 (Anode) der ersten Leuchtdiode 12 und einem ersten Kontakt 13.1 (Kathode) der zweiten Leuchtdiode 13 leitend verbunden. Die erste Leuchtdiode 12 und die zweite Leuchtdiode 13 sind somit antiparallel an den ersten Anschluss 9.1 und den zweiten Anschluss 9.2 des Betriebsgeräts 1 geschaltet. Der Testschalter 11 ist parallel zu den zueinander gegenläufig parallel geschalteten Leuchtdioden 12, 13 an den ersten Anschluss 9.1 und den zweiten Anschluss 9.2 geschaltet.

Der Testschalter 11 ist so ausgelegt, den ersten Anschluss 9.1 und den zweiten Anschluss 9.2 bei Betätigung des Testschalters 11 leitend miteinander zu verbinden (kurzzuschließen).

Werden mittels des Testschalters 11 der erste Anschluss 9.1 und der zweite Anschluss 9.2 leitend miteinander verbunden, so ist dieser Kurzschluss beispielsweise dadurch für das Betriebsgerät 1 zu erfassen, dass eine Spannung zwischen dem ersten Anschluss 9.1 und dem zweiten Anschluss 9.2 zusammenbricht, insbesondere einen minimalen Spannungswert unterschreitet, obwohl ein begrenzter Konstantstrom über den ersten Anschluss 9.1 und den zweiten Anschluss 9.2 fließt.

In einer weiteren Ausführung des Betriebsgeräts 1, insbesondere der Konstantstromquelle 10 und des Mikroprozessors 6, wird der mittels des Testschalters 11 erzeugte Kurzschluss zwischen dem ersten Anschluss 19.1 und dem zweiten Anschluss 9.2 anhand eines Regelparameters der Konstantstromquelle 10, beispielsweise einer Taktung eines Schalters der Konstantstromquelle 10, erkannt.

Der erkannte Kurzschluss zwischen dem ersten Anschluss 9.1 und dem zweiten Anschluss 9.2 kann in dem Mikroprozessor 6 dazu genutzt werden, eine entsprechende Testprozedur zu starten. In einer Ausführung wird zusätzlich die Zeitdauer des Kurzschlusses bestimmt und entsprechend der Dauer des Kurzschlusses ein Funktionstest des Betriebsgeräts 10 ausgeführt, ein Funktionstest mit einer vorbestimmten Testdauer gestartet, oder eine Funktionstestdauer eingestellt. Beispielsweise kann durch Betätigung des Testschalters 11 ein Betrieb der Notleuchtmittel des Leuchtenmoduls 2 mittels aus dem Akkumulator 4 entnommener Energie ausgelöst werden.

Die antiparallele Schaltung der Leuchtdioden 12 und 13 bezüglich des ersten Anschlusses 9.1 und des zweiten Anschlusses 9.2 bewirkt, dass je nach Polarität einer Spannung zwischen dem ersten Anschluss 9.1 und dem zweiten Anschluss 9.2 jeweils eine der beiden Leuchtdioden 12, 13 in Sperrichtung geschaltet ist, also lediglich eine der beiden Leuchtdioden 12, 13 leuchten kann. Die erste Leuchtdiode 12 und die zweite Leuchtdiode 13 sind somit durch die die Richtung eines Stroms, der durch eine Konstantstromquelle 10 des Betriebsgeräts 1 erzeugt wird, gezielt einzeln ansprechbar und damit jeweils gezielt zur Lichtabgabe anzuregen.

Die Konstantstromquelle 10 ist so ausgelegt, dass die Richtung eines zwischen dem ersten Anschluss 9.1 und dem zweiten Anschluss 9.2 eingeprägten Stroms umkehrbar ist. Eine Umkehr der Stromrichtung kann in einer Ausführung der Erfindung durch ein Umschalten der Stromrichtung der Konstantstromquelle 10 verwirklicht werden. Damit kann mittels der Stromrichtung des Stroms zwischen dem ersten Anschluss 9.1 und dem zweiten Anschluss 9.2 entweder die erste Leuchtdiode 12 oder die zweite Leuchtdiode 13 zur Lichtabgabe angeregt werden.

Damit ist eine Statusanzeige des Betriebsgeräts 1 mittels zweier Leuchtdioden, in einer Ausführung auch verschiedenfarbiger Leuchtdioden, möglich.

Mit den Leuchtdioden 12, 13 werden unterschiedliche Systemstati anzeigbar, wobei die Konstantromquelle 10 beispielsweise die Leuchtdioden 12, 13 in die Zustände "ein", "aus", "schnell blinkend", "langsam blinkend" entsprechend bestimmten Betriebs- und Testzustände des Betriebsgeräts 1, wie beispielsweise "System OK", "Funktionstest läuft", Betriebsdauertest läuft", "Lastfehler", "Akkufehler", "Ladefehler", "Notbetrieb", schalten kann. Zusätzlich oder alternativ können auch andere Informationen über das Betriebsgerät 1 ausgegeben, beispielsweise eine Adresse oder die bisherige Betriebsdauer. Die Ausgabe von Systemstati oder auch anderen Informationen kann auch durch eine kodierte Folge von Aktivierungen der Leuchtdioden erfolgen, beispielsweise durch alternierende Folgen von Farbwechseln und / oder auch durch unterschiedliche zeitliche Folgen von Ausgaben, wobei beispielsweise die Aktivierungsdauer oder Pausendauer variiert wird.

Die Konstantstromquelle 10 kann entsprechend einer weiteren Ausführung der Erfindung eine erste Konstantstromquelle und eine zweite Konstantstromquelle umfassen. Die erste Konstantstromquelle ist so geschaltet, dass sie einen ersten Strom mit einer ersten Stromrichtung von dem ersten Anschluss 9.1 zu dem zweiten Anschluss 9.2 erzeugt und somit die zweite Leuchtdiode 13 zur Lichtabgabe anregt. Die zweite Konstantstromquelle ist so geschaltet, dass sie einen zweiten Strom mit einer zweiten Stromrichtung von dem zweiten Anschluss 9.2 zu dem ersten Anschluss 9.1 erzeugt und somit die erste Leuchtdiode 12 zur Lichtabgabe anregt. Die Konstantstromquelle 10 kann alternativ die erste Konstantstromquelle an den ersten Anschluss 9.1 oder die zweite Konstantstromquelle an den zweiten Anschluss 9.2 schalten. Damit kann mittels alternativem Betrieb der ersten Konstantstromquelle und der zweiten Konstantstromquelle entweder die erste Leuchtdiode 12 oder die zweite Leuchtdiode 13 zum Leuchten angeregt werden, obwohl lediglich zwei Anschlüsse 9.1, 9.2 am Betriebsgerät 1 vorhanden sind.

In einer weiteren Ausführung der Erfindung werden die erste Leuchtdiode 12 und die zweite Leuchtdiode von der Konstantstromquelle 10 mittels periodischen Strompulsen in die erste Stromrichtung oder in die zweite Stromrichtung über den ersten Anschluss 9.1 oder den zweiten Anschluss 9.2 angesteuert. In einer Zeit T_{OFF} zwischen den Strompulsen prüft der Mikroprozessor 6, ob der Testschalter 11 betätigt und entsprechend ein Kurzschluss zwischen dem ersten Anschluss 9.1 und dem zweiten Anschluss 9.2 erzeugt wurde.

Mittels einer Stromrichtung an dem ersten Anschluss 9.1 und dem zweiten Anschluss 9.2, sowie mittels Erfassen eines Lastzustands, insbesondere eines Kurzschluss zwischen dem ersten Anschluss 9.1 und dem zweiten Anschluss 9.2 sind somit drei Funktionalitäten, der Betrieb zweier Leuchtdioden für Statusanzeige und das Auslösen einer oder mehrerer Testfunktionen lediglich eine Anschlussklemmenpaar integriert. Damit ist mittels der erfindungsgemäßen Anordnung eine vorteilhafte Reduzierung der Anschlussklemmen gegenüber den bekannten Betriebsgeräten erreicht.

Besonders bevorzugt, werden die erste Leuchtdiode 12, die zweite Leuchtdiode 13 und der Testschalter 11 in einem einzigen Bauteil integriert ausgeführt, wie dies in Figur 1 mittels der unterbrochenen Linie angedeutet ist. Damit sin die extern zugänglichen Anzeige- und Bedienelemente des Notlichtsystems an einer einem Nutzer zugänglichen Stelle gemeinsam anzuordnen, wobei der Installationsaufwand ebenso wie die Anzahl der Baugruppen entsprechend vorteilhaft reduziert ist.

Der Testschalter 11 kann beispielsweise derart ausgelegt sein, dass er zumindest teilweise transparent ausgeführt ist, wobei die erste Leuchtdiode 12 und die zweite Leuchtdiode 13 innerhalb des Testschalters 11 angeordnet sind, und im aktivierten Zustand den transparenten Teil des Testschalters 11 ausleuchten. Vorzugsweise sind die beiden Leuchtdioden 12 und 13 im beweglichen Betätigungsteil des Testschalters 11 angeordnet. Alternativ können aber beispielsweise die beiden Leuchtdioden 12 und 13 in einem fixen Teil des Testschalters angeordnet sein. Es kann der Testschalter 11 auch zwei Teilbereiche aufweisen, wobei jede der Leuchtdioden 12 und 13 in einem der beiden Teilbereiche angeordnet ist und somit jeweils ein unterschiedlicher Teilbereich durch die beiden Leuchtdioden 12 und 13 beleuchtet wird.

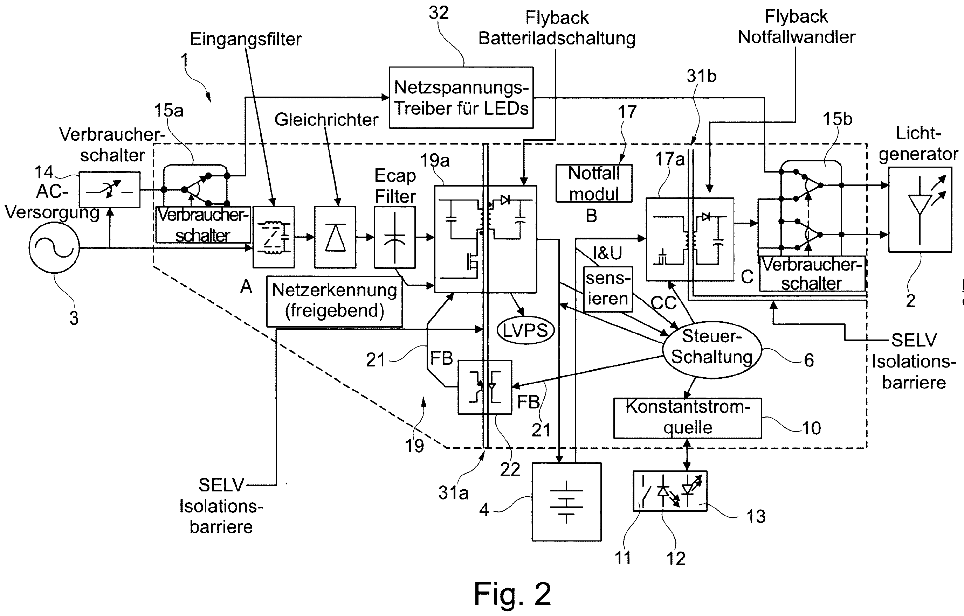

In Fig. 2 ist eine zweite Ausführungsform der Erfindung dargestellt. Die dargestellte Ausführungsform unterscheidet sich von der in Fig. 1 dargestellten Ausführungsform insbesondere dadurch, dass nunmehr ein Betriebsgerät 10 gemäß einem Aspekt der Erfindung gezeigt wird. Darin ist schematisch gezeigt, dass das Notlichtgerät 10 in drei Bereiche A, B, C unterteilt ist, die voneinander jeweils durch eine Sicherheitskleinspannungs-Isolationsbarriere 31a, 31b (Safety Extra Low Voltage (SELV) Isolation Barrier) voneinander getrennt sind. Ein LED-Treiber 32 für den Netzbetrieb ist in Fig. 2 als Netzspannungs-Treiber für LED bezeichnet.

Aus Fig. 2 geht hervor, dass ein erster Strompfad ausgehend von der Netzversorgungsquelle 3 über einen Netzschalter 14, ein erstes Relais 15a, den LED-Treiber 32 für den Netzbetrieb und ein zweites Relais 15b zu dem Leuchtmittel des Leuchtenmoduls 2 führt. Dieser Strompfad führt teilweise durch das Betriebsgerät 10 (veranschaulicht in den Bereichen A und C in denen das erste und das zweite Relais 15a, 15b angeordnet sind). Insbesondere der LED-Treiber 32 und die Relais 15a und 15b sind optionale Elemente, es kann auch vorgesehen sein, dass das Betriebsgerät 1 auch bei anliegender Netzspannung 3 die LED 2 betreibt.

Das erste und das zweite Relais 15a, 15b sind dabei dazu eingerichtet, die Last, bzw. das Leuchtmittel des Leuchtenmoduls 2 von dem LED-Treiber 32 für den Netzbetrieb auf einen Notfall-LED-Treiber 17 umzuschalten, wenn die Netzspannung ausfällt, bzw. wenn sich die Netzspannung aus einem vorbestimmten Bereich bewegt, bzw. ein vorbestimmter Schwellwert über- oder unterschritten wird.

Gezeigt ist auch, dass ein Energiespeicher 18 über eine Ladeschaltung 19 im Normalbetrieb durch die Netzspannung geladen wird. Der Energiespeicher 18 versorgt dann, im Notlichtbetrieb, den Notfall-LED-Treiber 17, der wiederum über das zweite Relais 15b das Leuchtmittel des Leuchtenmoduls 2 mit Strom versorgt.

Die Relais 15a und 15b sind nicht unbedingt erforderlich. Es können auch beispielsweise andere Umschaltelemente wie Halbleiterschalter verwendet werden, oder auch einfach Diodenentkopplungen genutzt werden.

Ebenfalls ist ein LED-Treiber 32 für den Netzbetrieb nicht zwingend erforderlich, dass Betriebsgerät 1 kann auch derart ausgelegt sein, dass es auch bei anliegender Netzspannung 3 die Leuchtmittel des Leuchtenmoduls 2 betreiben kann.

Gezeigt ist auch, dass der Energiespeicher 18 durch eine Sicherheitskleinspannungs-Isolationsbarriere 31b von dem Leuchtmittel des Leuchtenmoduls 2 getrennt ist.

Die Ladeschaltung 19 weist insbesondere ein Potentialtrennungselement 19a auf, das ein Überbrücken der Isolationsbarriere 31a unter Beibehaltung der galvanischen Trennung ermöglicht. Bei dem Potentialtrennungselement 19a handelt es sich dabei um einen Konverter und insbesondere um einen Flyback-Konverter, d.h. einen Konverter mit einem getakteten Schalter, über den der Energiespeicher bei Anliegen der Netzspannung, d.h. im Normalbetrieb, geladen wird.

Dargestellt ist auch eine Feedback-Leitung 21 über einen Optokoppler 22, über die ein Feedback-Signal an die Primärseite der Ladungsschaltung übertragen werden kann.

Ebenfalls ist das Potentialtrennungselement 17a des Notfall-LED-Treibers 17 gezeigt, das dazu eingerichtet ist die Sicherheitskleinspannungs-Isolationsbarriere 31b unter Beibehaltung der galvanischen Trennung zu überbrücken, durch die der Energiespeicher sowie der sekundärseitige Teil der Ladeschaltung 19 von dem Leuchtenmodul 2 (z.B. der LED, LED-Strecke, ...) getrennt ist. Im dargestellten Fall handelt es sich bei dem Potentialtrennungselement 17a ebenfalls um einen Konverter und insbesondere um einen Flyback-Konverter, der ebenfalls getaktet betrieben wird.

In Fig. 2 ist zudem eine Steuerschaltung 6 gezeigt, die anhand der durch das Potentialtrennungselement 17a der Ladeschaltung übertragene Spannung/des übertragenen Stroms direkt oder indirekt ermittelt, ob ein Notlichtbetrieb vorliegt. Die Steuerschaltung 6 kann daher indirekt oder direkt die Netzspannung erfassen (beispielsweise mittels einer Messung der Spannung auf der auf der Sekundärseite des Potentialtrennungselements der Ladeschaltung 19a) und somit auch einen Ausfall der Netzspannung, bzw. ein Abweichen der Netzspannung von einem vorbestimmten Wert, bzw. aus einem vorbestimmten Intervall, erkennen. Die Steuerschaltung 6 kann auch die Taktung des Potentialtrennungselements 17a des Notfall-LED-Treibers 17 steuern, und somit die Leistung, den Strom und/oder die Spannung steuern, mit der das Leuchtmittel des Leuchtenmoduls 2 im Notlichtbetrieb versorgt wird.

Dabei kann die Steuerschaltung 6 auch den von dem Energiespeicher 18 abgegebenen Strom, bzw. die abgegebene Spannung erfassen und den Betrieb des Indikators Indikator mit einer Statusanzeige mittels der ersten Leuchtdiode 12 und der zweiten Leuchtdiode 13 steuern. Weitere Informationen von weiteren Modulen des Notlichtgeräts (von einem Testschalter 11 zum Initiieren eines Testmodus) können von der Steuerschaltung 6 empfangen, verarbeitet und/oder an diese gesendet werden.

Die Steuerschaltung 6 kann durch einen Mikrocontroller (µC), eine integrierte Schaltung IC und/oder eine ASIC realisiert sein.

Es kann im Bereich des Energiespeichers 18, d.h. auf der Sekundärseite des Potentialtrennungselements der Ladeschaltung 19a und auf der Primärseite des Potentialtrennungselements 17a des Notfall-LED-Treibers 17, eine Stromquelle mit niedriger Spannung (Low Voltage Power Source, LVPS) vorgesehen sein. Die Stromquelle mit niedriger Spannung (LVPS) kann die Steuerschaltung 6 mit einer Betriebsspannung versorgen.

Die dargestellte Steuerschaltung 6 (IC, ASIC, Mikrocontroller) kann dabei den Strom und/oder die Spannung, mit der der Energiespeicher 18 über das Potentialtrennungselement 19a der Ladeschaltung 19 versorgt wird, sowie die Spannung und/oder den Strom, die/der von dem Energiespeicher 19 dem Potentialtrennungselement 17a des Notfall-LED-Treibers 17 zugeführt wird, erfassen. Ebenfalls kann die Steuerschaltung 6 die Taktung des Schalters des Potentialtrennungselements 17a (Konverter) des Notfall-LED-Treibers 17 steuern und über einen Optokoppler 22 ein Feedback-Signal über einen Feedback-Pfad 21 an die Primärseite der Ladeschaltung 19 signalisieren. Durch Verwendung des Optokopplers 22 wird die galvanische Trennung zwischen Energiespeicher und Netzspannung 13 erhalten.

Die Steuerschaltung 6 kann dabei wiederum zusätzliche Informationen auswerten, die beispielsweise von einem Testschalter 11 sowie über eine optionale DALI-Schnittstelle 28 zugeführt werden. Weiter kann die Steuerschaltung wiederum einen Indikator mit einer Statusanzeige mittels der ersten Leuchtdiode 12 und der zweiten Leuchtdiode 13 ansteuern, der beispielsweise den Notlichtbetrieb nach außen signalisiert. Schließlich kann die Steuerschaltung 6 über die DALI-Schnittstelle mit anderen Geräten kommunizieren.

Es liegt eine Trennung des Energiespeichers 18 von der an dem Leuchtmittel des Leuchtenmoduls 2 anliegenden Netzspannung durch die isolierende Barriere 31b vor. Somit ist es ermöglicht, die Stromversorgung des Leuchtmittels des Leuchtenmoduls 2 durch den Energiespeicher 18 über den Entladestrom des Energiespeichers 18 zu regeln. Dadurch ist es möglich, eine größere Anzahl verschiedener Spannungen an dem Leuchtmittel des Leuchtenmoduls 2 bereitzustellen, als es ein Einsatz von anderen Potentialtrennungselementen, wie beispielsweise Boost-Konvertern (Aufwärtswandlern), erlauben würde. Zudem ist bei niedrigen Kosten ein Wirkungsgrad des Energiespeichers 18 von ca. 80% oder höher erreichbar (im quasiresonanten (QR) Betrieb).

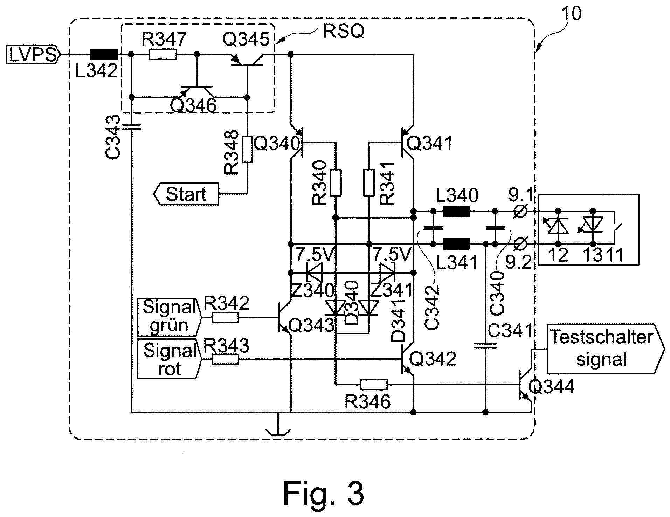

Fig. 3 zeigt eine detailliertere Darstellung einer Konstantstromquelle 10 gemäß einer bevorzugten Ausführung der Erfindung. Die Steuerschaltung 6 selbst ist in der Fig. 3 nicht dargestellt. Allerdings sind die Anschlüße 'Start' "Signal grün' "Signal rot' und 'Testschaltersign.' abgebildet, welche mit der Steuerschaltung 6 verbunden bzw. als Ausgangsspins oder Eingangsspins (Ausgangs- oder Eingangsverbindungen) der Steuerschaltung 6 ausgelegt sind.

Vorzugsweise wird die Konstantstromquelle 10 aus einer internen Spannungsversorgung des Betriebsgerätes 1 gespeist, beispielsweise ausgehend von der Stromquelle mit niedriger Spannung (LVPS) oder von der Batterie 4. Diese Speisung aus der internen Spannungsversorgung des Betriebsgerätes 1 kann über eine Induktivität L342 einer Referenzstromquelle RSQ, gebildet aus den Transistoren Q346 und Q345 sowie dem Basiswiderstand R347, zugeführt werden. Die Referenzstromquelle RSQ kann über den Anschluß 'Start', welcher von der Steuerschaltung 6 zugeführt wird, aktiviert oder deaktiviert werden. In einer Anlaufphase kann der Anschluß Start beispielsweise durch Anlegen eines Hochpegels an der Basis des Transistors Q345 dazu genutzt werden, die Referenzstromquelle RSQ zu aktivieren.

Anschließend auf die Referenzstromquelle RSQ folgen zwei parallele Strompfade, wobei jeweils ein PNP-Transistor Q340 bw. Q341 mit dem Emitter-Anschluß mit dem Ausgang der Referenzstromquelle RSQ verbunden ist. Jeder der beiden PNP-Transistoren Q340 bzw. Q341 ist mit dem Kollektor-Anschluß jeweils mit dem Kollektor-Anschluß eines NPN-Transistors Q343 bw. Q342 verbunden. Der Schnittpunkt von Kollektor-Anschluß des ersten PNP-Transistors Q340 und Kollektor-Anschluß des ersten NPN-Transistors Q343 ist über eine zweite Filterinduktivität L340 mit dem ersten Anschluß 9.2 verbunden, der Schnittpunkt von Kollektor-Anschluß des zweiten PNP-Transistors Q341 und Kollektor-Anschluß des zweiten NPN-Transistors Q342 ist über eine erste Filterinduktivität L341 mit dem ersten Anschluß 9.1 verbunden. Die Emitter-Anschlüsse der NPN-Transistoren Q342 und Q343 sind jeweils mit Masse verbunden. Die Basis des ersten NPN-Transistors Q343 ist mit dem Steuerausgang 'Signal grün' der Steuerschaltung 6 verbunden. Die Basis des zweiten NPN-Transistors Q342 ist mit dem Steuerausgang 'Signal rot' der Steuerschaltung 6 verbunden. Die beiden PNP-Transistoren Q340 und Q341 sind jeweils in Emitterschaltung angeordnet, wobei bei an dem Emitter des ersten PNP-Transistors Q340 der ersten Emitterwiderstand R340 mit der ersten Filterinduktivität L340 und somit dem ersten Anschluß 9.1 verbunden ist, und der Emitter des zweite PNP-Transistor Q341 über den zweiten Emitterwiderstand R341 mit der zweiten Filterinduktivität L341 und somit dem zweiten Anschluß 9.2 verbunden ist.

Wenn am Steuerausgang ,Signal grün' der Steuerschaltung 6 ein Hochpegel-Signal ausgegeben wird, dann wird der erste NPN-Transistor Q343 eingeschaltet. Ausgehend von der Referenzstromquelle RSQ kann nunmehr ein Strom durch den zweiten PNP-Transistoren Q341 und über die erste Filterinduktivität L340 zu dem ersten Anschluß 9.1 fließen. Ausgehend vom ersten Anschluß 9.1 kann der Strom durch die zweite Leuchtdiode 13 zu dem zweiten Anschluß 9.2 fließen. Von dem zweiten Anschluß 9.2 fließt der Strom weiter über die zweite Filterinduktivität L341 zu dem ersten NPN-Transistors Q343 zur Masse. Aufgrund der Potentiale an den Anschlüssen 9.1 und 9.2. bleibt die erste Leuchtdiode 12 gesperrt.

Wenn am Steuerausgang 'Signal rot' der Steuerschaltung 6 ein Hochpegel-Signal ausgegeben wird, dann wird der zweite NPN-Transistor Q342 eingeschaltet. Ausgehend von der Referenzstromquelle RSQ kann nunmehr ein Strom durch den ersten PNP-Transistoren Q340 und über die zweite Filterinduktivität L341 zu dem zweiten Anschluß 9.2 fließen. Ausgehend vom zweiten Anschluß 9.2 kann der Strom durch die erste Leuchtdiode 12 zu dem ersten Anschluß 9.1 fließen. Von dem ersten Anschluß 9.1 fließt der Strom weiter über die erste Filterinduktivität L340 zu dem zweiten NPN-Transistor Q342 zur Masse. Aufgrund der Potentiale an den Anschlüssen 9.1 und 9.2. bleibt die zweite Leuchtdiode 13 gesperrt.

Die Konstantstromquelle 10 weist somit eine erste Konstantstromquelle auf, die durch die Serienschaltung aus Referenzstromquelle RSQ, dem ersten PNP-Transistor Q340 und den zweiten NPN-Transistor Q342 gebildet wird, und eine zweite Konstantstromquelle, die durch die Serienschaltung aus Referenzstromquelle RSQ, dem zweiten PNP-Transistor Q341 und den ersten NPN-Transistor Q343 gebildet wird. Es können dabei alternativ die erste oder die zweite Konstantstromquelle an den ersten Anschluss 9.1 und an den zweiten Anschluss 9.2 geschaltet werden.

Im Normalfall wird das Betriebsgerät 1 die zweite Leuchtdiode 13, welche vorzugsweise grün ist, aktivieren. Beispielsweise in einem Fehlerfall kann alternativ die erste Leuchtdiode 12 aktiviert werden.

Im Weiteren soll die Erkennung der Betätigung des Testschalters 11 beschrieben werden. Es kann hierbei von dem Betrieb im Normalfall des Betriebsgerätes 1 ausgegangen werden, wobei die zweite Leuchtdiode 13 aktiviert ist. Somit ist auch der zweite PNP-Transistor Q341 aktiviert. Wenn nunmehr durch Betätigung des Testschalters 11 die beiden Anschlüsse 9.1 und 9.2 kurzgeschlossen werden, liegt durch den eingeschalteten zweiten PNP-Transistor Q341 das Potential der Spannungsversorgung des Betriebsgerätes 1 an den beiden Anschlüssen 9.1 und 9.2 an. Mit beiden Anschlüßen 9.1 und 9.2 ist jeweils über die Filterinduktivität L340 bzw. L341 eine erste Diode D341 bzw. eine zweite Diode D342 verbunden. Sobald ein Kurzschluß über den beiden Anschlüßen 9.1 und 9.2 vorliegt, schalten beide Dioden D341 und D342 durch, und somit wird der dritte NPN-Transistor Q344 ausgeschaltet.

Solange der Testschalter 11 nicht betätigt ist und somit die beiden Anschlüsse 9.1 und 9.2 nicht kurzgeschlossen sind, liegt bei aktivierter Leuchtdiode 12 oder 13 jeweils nur an einer Diode D341 oder D340 ein hohes Potential an, und an der jeweils anderen Diode liegt niedriges Potential an, da über einer der beiden Leuchtdioden 12 oder 13 eine Spannung abfällt und einer der beiden NPN-Transistoren Q343 bzw. Q342 eingeschaltet ist, und somit das Potential an seinem Kollektor heruntergezogen wird. Somit verbleibt der dritte NPN-Transistor Q344 im eingeschalteten Zustand.

Die beiden Anschlüße 9.1 und 9.2 sind über eine ODER-Verknüpfung einer Auswerteschaltung verbunden, die beispielsweise durch ein Dioden-Netzwerk (DD340, D341) gebildet werden kann. Wenn beide Anschlüße 9.1 und 9.2 kurzgeschlossen sind und somit auf gleichem Potential liegen, dann liegt am Ausgang der Auswerteschaltung ein anderes Signal an, als wenn an den beiden Anschlüssen 9.1 und 9.2 ein unterschiedliches Potential anliegt. An den beiden Anschlüssen 9.1 und 9.2 liegt ein unterschiedliches Potential an, wenn eine der beiden Leuchtdioden 12 oder 13 aktiviert ist. Wenn der Testschalter betätigt wird, werden die beiden Anschlüssen 9.1 und 9.2 kurzgeschlossen und es liegt das gleiche Potential an beiden Anschlüssen 9.1 und 9.2 an.

Es sind also der erste Anschluss 9.1 und der zweite Anschluss 9.2 über eine ODER-Verknüpfung der Auswerteschaltung verbunden, und die Auswertschaltung signalisiert eine Betätigung des Testschalters 11, wenn beide Anschlüße 9.1 und 9.2 kurzgeschlossen sind und somit auf gleichem Potential liegen. Diese Signalisierung der Betätigung des Testschalters 11 durch die Auswerteschaltung kann durch die Steuerschaltung 6 erkannt und ausgewertet werden.

Wenn dieser dritte Transistor Q344 eingeschaltet, wird das Potential am Kollektor des dritten Transistor Q344 auf Masse gezogen, was von der Steuerschaltung 6 an dem Eingang 'Testschaltersign.' erfasst werden kann. Beispielsweise ist der Eingang 'Testschaltersign.' mit einem Pull-Up Widerstand oder einer internen Strom- oder Spannungsquelle der Steuerschaltung 6 verbunden, so dass bei offenem dritten Transistor Q344 das Potential am Kollektor des dritten Transistor Q344 auf einem zu dem Masse-Potential unterschiedlichen Potential liegt.

Die Helligkeit der Leuchtdioden 12 und 13 kann über eine entsprechende Ansteuerung des ersten und zweiten NPN-Transistors Q343 und Q342 beeinflußt werden. Beispielsweise können die beiden NPN-Transistoren Q343 und Q342 jeweils mit einem pulsmodulierten Signal wie beispielsweise einem pulsweitenmodulierten Signal angesteuert werden. Abhängig vom Tastverhältnis des pulsmodulierten Signal wird sich die Helligkeit der Leuchtdioden 12 und 13 ändern. Es können aber beispielsweise auch die beiden NPN-Transistoren Q343 und Q342 im Linearbetrieb betrieben werden und durch Wahl der Amplitude der Basis-Spannung unterschiedlich stark eingeschaltet werden. In diesem Fall würden die beiden NPN-Transistoren Q343 und Q342 als eine Art einstellbarer Widerstand arbeiten.

Die Helligkeit der Leuchtdioden 12 und 13 kann beispielsweise durch eine Vorgabe des Benutzers an dem Betriebsgerät 1 vorgegeben werden, beispielsweise durch Programmierung über eine vorhandene Schnittstelle oder eine Art der Konfiguration wie beispielsweise durch ein Potentiometer oder DIP-Schalter.

Die Konstantstromquelle 10 kann alternativ oder zusätzlich zu der Referenzstromquelle RSQ auch einen aktiv getakteten Schaltregler aufweisen, um einen konstanten Strom für die Speisung der Leuchtdioden 12 und 13 bereitszustellen.

## Patentansprüche

1. Anordnung umfassend ein Betriebsgerät (1) für Notbeleuchtung, eine erste Leuchtdiode (12) und einen Testschalter (11),
wobei das Betriebsgerät (1) einen ersten Anschluss (9.1) und einen zweiten Anschluss (9.2), eine Steuerschaltung (6), und eine Konstantstromquelle (10) umfasst, und
**dadurch gekennzeichnet,**
**dass** der Testschalter (11) parallel zu der ersten Leuchtdiode (12) zwischen den ersten Anschluss (9.1) und den zweiten Anschluss (9.2) geschaltet ist und eingerichtet ist, bei Betätigung den ersten Anschluss (9.1) mit dem zweiten Anschluss (9.2) kurzzuschließen,
**dass** eine zweite Leuchtdiode (13) gegenläufig parallel zu der ersten Leuchtdiode (12) zwischen den ersten Anschluss (9.1) und den zweiten Anschluss (9.2) geschaltet ist,
**dass** die Konstantstromquelle (10) ausgelegt ist, einen Konstantstrom mit einer ersten oder mit einer der ersten Polarität entgegengesetzten zweiten Polarität zwischen dem ersten Anschluss (9.1) und dem zweiten Anschluss (9.2) einzuprägen, und
**dass** die Steuerschaltung (6) ausgelegt ist, einen Kurzschluss zwischen dem ersten Anschluss (9.1) und dem zweiten Anschluss (9.2) auf Grundlage eines Regelparameters der Konstantstromquelle (10) zu bestimmen.

2. Anordnung nach Anspruch 1,
**dadurch gekennzeichnet,**
**dass** die Steuerschaltung (6) ausgelegt ist, einen Kurzschluss zwischen dem ersten Anschluss (9.1) und dem zweiten Anschluss (9.2) auf Grundlage einer Taktung eines Schalters der Konstantstromquelle (10) zu bestimmen.

3. Anordnung nach einem der Ansprüche 1 oder 2,
**dadurch gekennzeichnet,**
**dass** die Steuerschaltung (6) ausgelegt ist, die Konstantstromquelle (10) so zu steuern, dass entweder der erste Konstantstrom mit der ersten Polarität oder der zweite Konstantstrom mit der zweiten Polarität zwischen dem ersten Anschluss (9.1) und dem zweiten Anschluss (9.2) eingeprägt wird.

4. Anordnung nach Anspruch 3,
**dadurch gekennzeichnet,**
**dass** die Konstantstromquelle (10) ausgelegt ist, zwischen dem ersten Konstantstrom erster Polarität oder dem zweiten Konstantstrom zweiter Polarität umzuschalten.

5. Anordnung nach Anspruch 3,
**dadurch gekennzeichnet,**
**dass** die Konstantstromquelle (10) eine erste Konstantstromquelle und eine zweite Konstantstromquelle umfasst, wobei alternativ die erste oder die zweite Konstantstromquelle an den ersten Anschluss (9.1) und an den zweiten Anschluss (9.2) geschaltet werden können.

6. Anordnung nach einem der Ansprüche 1 bis 5,
**dadurch gekennzeichnet,**
**dass** die erste Leuchtdiode (12), die zweite Leuchtdiode (13) und der Testschalter (11) in einer gemeinsamen Baugruppe integriert ausgeführt sind.

7. Notbeleuchtung aufweisend zumindest ein Notleuchtmittel und die Anordnung nach einem der Ansprüche 1 bis 6.

## Claims

1. An arrangement comprising an operating device (1) for emergency lighting, a first light-emitting diode (12) and a test switch (11),
wherein the operating device (1) comprises a first terminal (9.1) and a second terminal (9.2), a control circuit (6), and a constant current source (10), and
**characterized in that**
the test switch (11) is connected in parallel to the first light-emitting diode (12) between the first terminal (9.1) and the second terminal (9.2) and is set up to short-circuit the first terminal (9.1) with the second terminal (9.2) when actuated,
a second light-emitting diode (13) is connected in the opposite direction in parallel to the first light-emitting diode (12) between the first terminal (9.1) and the second terminal (9.2),
the constant current source (10) is designed to impress a constant current with a first or with a second polarity opposite to the first polarity between the first terminal (9.1) and the second terminal (9.2), and
the control circuit (6) is designed to determine a short circuit between the first terminal (9.1) and the second terminal (9.2) on the basis of a control parameter of the constant current source (10).

2. The arrangement according to claim 1,
**characterized in that**
the control circuit (6) is designed to determine a short circuit between the first terminal (9.1) and the second terminal (9.2) on the basis of a clocking of a switch of the constant current source (10).

3. The arrangement according to either claim 1 or 2,
**characterized in that**
the control circuit (6) is designed to control the constant current source (10) in such a way that either the first constant current having the first polarity or the second constant current having the second polarity is impressed between the first terminal (9.1) and the second terminal (9.2).

4. The arrangement according to claim 3,
**characterized in that**
the constant current source (10) is designed to switch between the first constant current of the first polarity or the second constant current of the second polarity.

5. The arrangement according to claim 3,
**characterized in that**
the constant current source (10) comprises a first constant current source and a second constant current source, wherein the first or the second constant current source can alternatively be connected to the first terminal (9.1) and to the second terminal (9.2).

6. The arrangement according to any of claims 1 to 5,
**characterized in that**
the first light-emitting diode (12), the second light-emitting diode (13) and the test switch (11) are designed to be integrated in a common assembly.

7. An emergency lighting system comprising at least one emergency lighting means and the arrangement according to any of claims 1 to 6.

## Revendications

1. Agencement comprenant un appareil de commande (1) pour l'éclairage de secours, une première diode électroluminescente (12) et un commutateur de test (11),
dans lequel l'appareil de commande (1) comprend un premier raccordement (9.1) et un second raccordement (9.2), un circuit de commande (6) et une source de courant constant (10) et
**caractérisé en ce**
**que** le commutateur de test (11) est connecté en parallèle à la première diode électroluminescente (12) entre le premier raccordement (9.1) et le second raccordement (9.2) et est conçu pour, lors de l'actionnement, court-circuiter le premier raccordement (9.1) avec le second raccordement (9.2),
**qu'**une seconde diode électroluminescente (13) est connectée en parallèle à l'opposé de la première diode électroluminescente (12) entre le premier raccordement (9.1) et le second raccordement (9.2),
**que** la source de courant constant (10) est conçue pour injecter un courant constant présentant une première polarité ou présentant une seconde polarité, opposée à la première polarité, entre le premier raccordement (9.1) et le second raccordement (9.2) et
**que** le circuit de commande (6) est conçu pour déterminer un court-circuit entre le premier raccordement (9.1) et le second raccordement (9.2) en fonction d'un paramètre de régulation de la source de courant constant (10).

2. Agencement selon la revendication 1,
**caractérisé en ce**
**que** le circuit de commande (6) est conçu pour déterminer un court-circuit entre le premier raccordement (9.1) et le second raccordement (9.2) en fonction de la synchronisation d'un commutateur de la source de courant constant (10).

3. Agencement selon l'une quelconque des revendications 1 ou 2,
**caractérisé en ce**
**que** le circuit de commande (6) est conçu pour commander la source de courant constant (10) de telle sorte que le premier courant constant présentant la première polarité ou le second courant constant présentant la seconde polarité soit injecté entre le premier raccordement (9.1) et le second raccordement (9.2).

4. Agencement selon la revendication 3,
**caractérisé en ce**
**que** la source de courant constant (10) est conçue pour commuter entre le premier courant constant de la première polarité ou le second courant constant de la seconde polarité.

5. Agencement selon la revendication 3,
**caractérisé en ce**
**que** la source de courant constant (10) comprend une première source de courant constant et une seconde source de courant constant, dans lequel la première ou la seconde source de courant constant peut alternativement être commutée vers le premier raccordement (9.1) et vers le second raccordement (9.2).

6. Agencement selon l'une quelconque des revendications 1 à 5,
**caractérisé en ce**
**que** la première diode électroluminescente (12), la seconde diode électroluminescente (13) et le commutateur de test (11) sont intégrés dans un module commun.

7. Éclairage de secours comportant au moins un moyen d'éclairage de secours et l'agencement selon l'une quelconque des revendications 1 à 6.
